# FASCICULE DE BREVET EUROPEEN

(11) **EP 0 890 387 B1**
(45) Date de publication et mention de la délivrance du brevet: **20.08.2003**
(21) Numéro de dépôt: 98401552.9
(22) Date de dépôt: 24.06.1998
(51) Int. Cl.: B01D 53/053, B01D 53/047

(54) **Procédé de séparation d'un mélange gazeux par adsorption à variation de pression**
Verfahren für die Trennung einer Gasmischung mittels Druckwechseladsorption
Process for the separation of a gas mixture with pressure swing adsorption

(30) Priorité: 09.07.1997 FR 9708724
(43) Date de publication de la demande: 13.01.1999
(73) Titulaire: L'air Liquide, S.A. à Directoire et Conseil de Surveillance pour l'Etude et l'Exploitation des Procédés Georges Claude, 75321 Paris Cedex 07 (FR)
(72) Inventeur: Petit, Pierre, 91370 Verrieres le Buisson (FR)
(74) Mandataire: Le Moenner, Gabriel

(56) Documents cités:
- EP-A- 0 689 862
- EP-A- 0 743 087
- EP-A- 0 821 992
- US-A- 5 565 018

## Description

La présente invention concerne les procédés de séparation de mélanges gazeux par adsorption à variation de pression dans des dispositifs d'adsorption comprenant au moins un adsorbeur ayant une entrée connectable à une machine tournante et une sortie connectable à une capacité de gaz de production et à une capacité de cycle, comprenant, successivement, dans un cycle, une phase de production, une phase de régénération et une phase de repressurisation.

Un procédé de ce type est décrit dans le document EP-A-0 743 087, au nom de la demanderesse.

La présente invention a pour objet de proposer un procédé amélioré permettant un gain d'énergie spécifique sans diminution de la productivité.

Pour ce faire, selon une caractéristique de l'invention, la phase de régénération comprend une étape initiale de dépressurisation où du gaz est extrait à co-courant de l'adsorbeur et adressé à la capacité de cycle, et qui comprend une première sous-étape où le mélange gazeux est adressé concomitamment à co-courant à l'adsorbeur.

Selon une autre caractéristique de l'invention, la phase de repressurisation comporte une étape initiale de repressurisation de l'adsorbeur à contre-courant par du gaz provenant de l'une des capacités et qui comprend une première sous-étape où du gaz est extrait concomitamment à contre-courant de l'adsorbeur.

Selon un aspect de l'invention, la fin desdites premières sous-étapes correspond à une inversion du sens de rotation de la machine tournante, c'est-à-dire au passage à zéro de la vitesse de rotation de la machine tournante, passant d'un mode de compression à un mode d'aspiration, ou inversement.

D'autres caractéristiques et avantages de la présente invention ressortiront de la description suivante, donnée à titre illustratif mais nullement limitatif, faite en relation avec les dessins annexés, sur lesquels :
- la figure 1 est une vue schématique d'un dispositif d'adsorption par la mise en oeuvre d'un procédé selon l'invention;
- la figure 2 représente schématiquement un cycle d'un procédé selon l'invention;
- la figure 3 est un diagramme, corrélé à celui de la figure 2, montrant les variations de la vitesse de rotation de la machine tournante lors des phases du cycle de la figure 2.

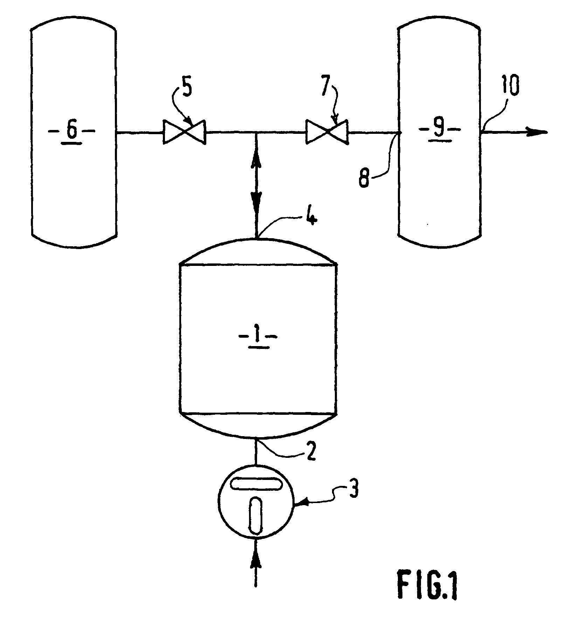

Sur la figure 1 on reconnaît un dispositif de séparation de gaz par adsorption de type dit VSA tel que décrit dans le document EP-A-0 743 087 sus-mentionné. Dans le mode de réalisation représenté à titre d'exemple, le dispositif comprend essentiellement un adsorbeur 1, de configuration générale verticale, ayant une rentrée 2 reliée en permanence à une machine tournante réversible 3, typiquement une machine Roots ou une machine à rotor multilobé.

L'adsorbeur 1 comporte une sortie 4 communiquant sélectivement, via une valve 5, avec une capacité de cycle 6 et, via une vanne 7, avec l'entrée 8 d'une capacité de gaz de production 9 ayant une sortie 10 connectable à un circuit utilisateur.

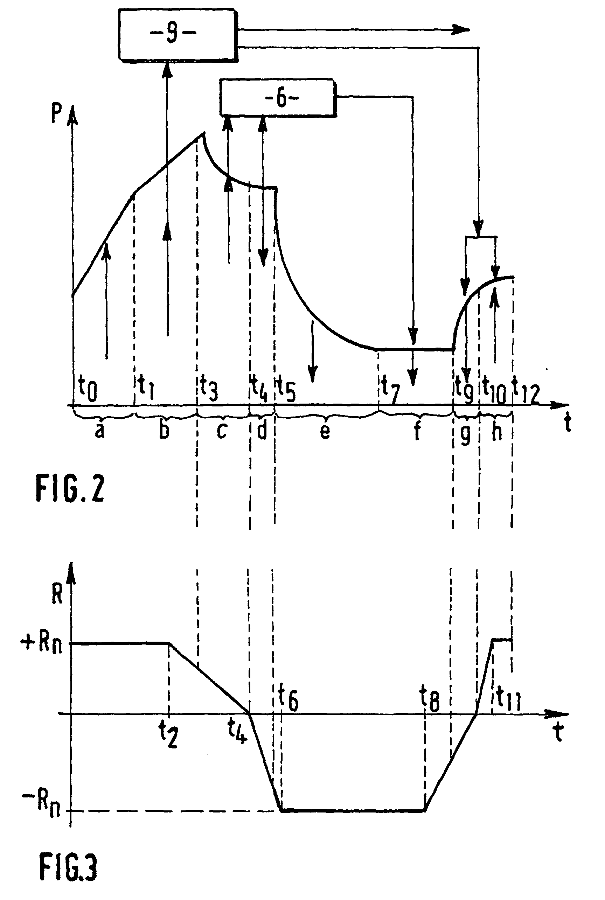

Comme représenté sur la figure 2, un dispositif selon la figure 1 est mis en oeuvre suivant un cycle comportant les étapes successives suivantes :
- a) (t₀-t₁) : une étape de repressurisation pure par admission à l'entrée 2 (à co-courant) de mélange gazeux comprimé par la machine 3 fonctionnant en compresseur sans extraction de gaz par la sortie 4 (vannes 5 et 7 fermées)
- b) (t₁-t₃) : une phase de production jusqu'à la pression haute de cycle, où le mélange gazeux à séparer continue d'être introduit à co-courant dans l'adsorbeur tandis que la fraction gazeuse non retenue dans l'adsorbeur est extraite par la sortie 4 et adressée à la capacité 9, la vanne 7 étant ouverte.
- c + d) (t₃-t₅) : une étape initiale de dépressurisation, où du gaz disponible dans la partie haute de l'adsorbeur est extrait à co-courant par la sortie 4 et adressé à la capacité 6, la vanne 5 étant ouverte (la vanne 7 étant fermée).
- e) (t₅-t₇) : une étape de pure dépressurisation à contre-courant via l'entrée 2, la machine tournante 3 fonctionnant en pompe (les vannes 5 et 7 étant fermées)
- f) (t₇-t₉) : une étape d'élution prolongeant l'étape précédente e) d'évacuation à contre-courant avec en outre balayage de l'adsorbeur à contre-courant par du gaz provenant de la capacité 6, la vanne 5 étant ouverte.
- g + h) (t₉-t₁₂) : une étape de repressurisation initiale avec admission à contre-courant, par l'entrée 4, de gaz de production en provenance de la capacité 9, la vanne 7 étant ouverte.

Conformément à un aspect de l'invention, comme on le voit sur la figure 3, pendant l'étape a) et environ une première moitié de l'étape b) la vitesse de la machine tournante 3, fonctionnant en compresseur, est constante. (vitesse nominale + Rₙ).

A un instant t₂ entre t₁ et t₃, l'entraînement de la machine tournante est interrompu et la vitesse de rotation de cette dernière décroit jusqu'à un instant t_{4,} entre les instants t₃ et t₅, c'est-à-dire au cours de l'étape initiale de dépressurisation, où la vitesse devient nulle. A l'instant t₄ la machine tournante, immobilisée, est entraînée dans l'autre sens pour fonctionner en pompe. Sa vitesse de rotation croit donc jusqu'à un instant t₆ postérieur à l'instant t₅, c'est-à-dire au début de la phase de pure dépressurisation e). De cet instant t₆ jusqu'à un instant t₈, situé entre les instants t₇ et t₉, c'est-à-dire après une première partie de l'étape f) d'élution, est conservée constante (vitesse nominale - Rₙ).

A l'instant t₈, l'entraînement de la machine tournante est interrompu et la vitesse de rotation de cette dernière décroit jusqu'à zéro à un instant t₁₀ entre les instants t₉ et t₁₂, c'est-à-dire lors d'une première partie de la première étape de recompression.

A l'instant t₁₀ la machine tournante commence à être entraînée dans l'autre direction, pour fonctionner de nouveau en compresseur, et sa vitesse croit rapidement jusqu'à atteindre la vitesse nominale Rₙ,
à l'instant t₁₁ toujours situé dans l'intervalle t₉-t₁₂, après quoi la vitesse de rotation de la machine tournante est conservée jusqu'à l'instant t₂ comme vu précédemment.

Comme on le voit sur la figure 2, cette séquence d'entraînement, de relaxation et de ré-entraînement de la machine tournante se traduit par le fait que la première étape de dépressurisation c + d) se décompose en une première sous-étape c) (t₃-t₄) où, concomitamment à l'extraction à co-courant de la fraction gazeuse non retenue vers la capacité de cycle 6, du mélange gazeux à séparer continue d'être introduit à co-courant, avec un débit diminuant jusqu'à zéro jusqu'à l'instant t₄, et en une seconde sous-étape d) (t₄-t₅) où, concomitamment à l'extraction à co-courant, la machine tournante ayant commencé à tourner en pompe, il se produit une extraction à contre-courant croissant progressivement jusqu'à l'instant t₅, après quoi la vanne 5 est fermée jusqu'à l'instant t₇.

De façon similaire, la première étape de repressurisation g-h) (t₉-t₁₂) se décompose en une première sous-étape g) (t₉-t₁₀) où, concomitamment à l'introduction à contre-courant de gaz de production en provenance de la capacité 9, une évacuation à contre-courant se produit par l'entrée 2 avec un débit se réduisant jusqu'à zéro à l'instant t₁₀ où, la machine tournante s'inversant et commençant à fonctionner en compresseur, la pressurisation se poursuit en une deuxième sous-étape avec admission par les deux extrémités, à contre-courant de gaz de production en provenance de la capacité 9 et à co-courant de mélange gazeux à séparer jusqu'à plein régime de la machine tournante fonctionnant en compresseur jusqu'à l'instant t₂.

La présente invention trouve une application particulière pour la production d'oxygène de moyenne pureté à partir de l'air sur un adsorbant de type zéolithe. Le cycle de la figure 2 correspond typiquement à un cycle d'une durée inférieure à 90 secondes, typiquement de l'ordre de 70 à 80 secondes, avec une pression haute de cycle n'excédant pas 1,5 x 10⁵ Pa et une pression basse de cycle n'excédant pas 0,5 x 10⁵ Pa.

## Revendications

1. Procédé de séparation d'un mélange gazeux par adsorption à variation de pression dans un dispositif d'adsorption comprenant au moins un adsorbeur ayant une entrée connectable à une machine tournante et une sortie connectable à une capacité de gaz de production et à une capacité de cycle, comprenant, successivement dans un cycle, une phase de production, une phase de régénération et une phase de repressurisation, **caractérisé en ce que** la phase de régénération comprend une étape initiale (c-d) de dépressurisation où du gaz est extrait à co-courant de l'adsorbeur et adressé à la capacité de cycle (6) et comprenant une première sous-étape (c) où le mélange gazeux à séparer est adressé concomitamment à co-courant à l'adsorbeur.

2. Procédé selon la revendication 1, **caractérisé en ce que** l'étape initiale de dépressurisation (c-d) comporte une deuxième sous-étape (d) où du gaz est extrait concomitamment à contre-courant de l'adsorbeur.

3. Procédé selon la revendication 1 et la revendication 2, **caractérisé en ce que** la transition entre les première (c) et deuxième (d) sous-étapes correspond à une inversion du sens de rotation de la machine tournante (3)

4. Procédé selon l'une des revendications précédentes, **caractérisé en ce que** la phase de repressurisation comporte une étape initiale (g-h) de repressurisation de l'adsorbeur à contre-courant par du gaz provenant de l'une des capacités et comprenant une première sous-étape (g) où du gaz est extrait concomitamment à contre-courant de l'adsorbeur.

5. Procédé selon la revendication 4, **caractérisé en ce que** l'étape initiale de repressurisation (g-h) comprend une deuxième sous-étape (h) où le mélange gazeux à séparer est adressé concomitamment à co-courant à l'adsorbeur.

6. Procédé selon la revendication 4 et la revendication 5, **caractérisé en ce que** la transition entre les première (g) et deuxième (h) sous-étapes de repressurisation correspond une inversion du sens de rotation de la machine tournante (3).

7. Procédé selon l'une des revendications 4 à 6, **caractérisé en ce que** le gaz de repressurisation à co-courant lors d'au moins la deuxième sous-étape (h) de l'étape initiale de repressurisation (g-h) provient de la capacité de gaz de production (9).

8. Procédé selon l'une des revendications précédentes, **caractérisé en ce que** la phase de régénération comporte une étape finale d'élution (f) par du gaz provenant de la capacité de cycle (6).

9. Procédé selon la revendication 8 **caractérisé en ce que** la phase de régénération comporte en outre une étape intermédiaire (e) de pure dépressurisation à contre-courant de l'adsorbeur.

10. Procédé selon la revendication 8 et la revendication 9, **caractérisé en ce que** la vitesse de la machine tournante est sensiblement constante sur la majeure partie de l'étape intermédiaire de dépressurisation (e) et sur le début de l'étape d'élution (f).

11. Procédé selon l'une des revendications précédentes, **caractérisé en ce que** la phase de repressurisation comporte une étape de pure repressurisation à co-courant (a) par du mélange gazeux à séparer.

12. Procédé selon la revendication 11, **caractérisé en ce que** la vitesse de la machine tournante est sensiblement constante durant l'étape de pure repressurisation (a) et une première partie de l'étape de production (b).

13. Procédé selon l'une des revendications précédentes, **caractérisé en ce que** la durée du cycle (t₀-t₁₂) est inférieure à 90 secondes.

14. Procédé selon l'une des revendications précédentes, pour la production d'oxygène à partir d'air.

## Patentansprüche

1. Verfahren zur Trennung einer Gasmischung mittels Druckwechseladsorption in einer Adsorptionseinrichtung, umfassend mindestens einen Adsorber, der einen an eine Drehmaschine anschließbaren Eingang und einen an eine Produktionsgaskapazität und eine Zykluskapazität anschließbaren Ausgang aufweist, in einem Zyklus aufeinanderfolgend umfassend eine Produktionsphase, eine Regenerationsphase und eine Druckerhöhungsphase, **dadurch gekennzeichnet, dass** die Regenerationsphase einen Anfangsschritt (c-d) der Druckminderung umfasst, in der Gas im Gleichstrom aus dem Adsorber abgezogen und zu der Zykluskapazität (6) befördert wird, und einen ersten Teilschritt (c) umfassend, in dem die zu trennende Gasmischung gleichzeitig im Gleichstrom zu dem Adsorber befördert wird.

2. Verfahren nach Anspruch 1, **dadurch gekennzeichnet, dass** der Anfangsschritt der Druckminderung (c-d) einen zweiten Teilschritt (d) umfasst, in dem Gas gleichzeitig im Gegenstrom aus dem Adsorber entzogen wird.

3. Verfahren nach Anspruch 1 und Anspruch 2, **dadurch gekennzeichnet, dass** der Übergang zwischen dem ersten (c) und dem zweiten (d) Teilschritt einer Drehrichtungsumkehr der Drehmaschine (3) entspricht.

4. Verfahren nach einem der vorhergehenden Ansprüche, **dadurch gekennzeichnet, dass** die Druckerhöhungsphase einen Anfangsschritt (g-h) der Druckerhöhung des Adsorbers im Gegenstrom durch Gas umfasst, das von einer der Kapazitäten stammt, und einen ersten Teilschritt (g) umfassend, in dem Gas gleichzeitig im Gegenstrom aus dem Adsorber abgezogen wird.

5. Verfahren nach Anspruch 4, **dadurch gekennzeichnet, dass** der Anfangsschritt (g-h) der Druckerhöhung einen zweiten Teilschritt (h) umfasst, in dem die zu trennende Gasmischung gleichzeitig im Gleichstrom zu dem Adsorber befördert wird.

6. Verfahren nach Anspruch 4 und Anspruch 5, **dadurch gekennzeichnet, dass** der Übergang zwischen dem ersten (g) und dem zweiten (h) Teilschritt der Druckerhöhung einer Drehrichtungsumkehr der Drehmaschine (3) entspricht.

7. Verfahren nach einem der Ansprüche 4 bis 6, **dadurch gekennzeichnet, dass** das Gas zur Druckerhöhung im Gleichstrom bei mindestens dem zweiten Teilschritt (h) des Anfangsschrittes (g-h) der Druckerhöhung von der Produktionsgaskapazität (9) stammt.

8. Verfahren nach einem der vorhergehenden Ansprüche, **dadurch gekennzeichnet, dass** die Regenerationsphase einen Endschritt (f) der Eluierung durch Gas umfasst, das von der Zykluskapazität (6) stammt.

9. Verfahren nach Anspruch 8, **dadurch gekennzeichnet, dass** die Regenerationsphase ferner einen Zwischenschritt (e) der reinen Druckminderung im Gegenstrom des Adsorbers umfasst.

10. Verfahren nach Anspruch 8 und Anspruch 9, **dadurch gekennzeichnet, dass** die Geschwindigkeit der Drehmaschine im Wesentlichen im größten Teil des Zwischenschrittes (e) der Druckminderung und am Anfang des Eluierungsschrittes (f) konstant ist.

11. Verfahren nach einem der vorhergehenden Ansprüche, **dadurch gekennzeichnet, dass** die Druckerhöhungsphase einen Schritt (a) der reinen Druckerhöhung im Gleichstrom durch eine zu trennende Gasmischung umfasst.

12. Verfahren nach Anspruch 11, **dadurch gekennzeichnet, dass** die Geschwindigkeit der Drehmaschine im Wesentlichen während des Schrittes (a) der reinen Druckerhöhung und eines ersten Teils des Produktionsschrittes (b) konstant ist.

13. Verfahren nach einem der vorhergehenden Ansprüche, **dadurch gekennzeichnet, dass** die Zyklusdauer (t₀-t₁₂) kürzer als 90 Sekunden ist.

14. Verfahren nach einem der vorhergehenden Ansprüche zur Herstellung von Sauerstoff aus der Luft.

## Claims

1. Process for the separation of a gas mixture by pressure swing adsorption in an adsorption plant comprising at least one adsorber having an input that can be connected to a rotating machine and an output that can be connected to a production gas tank and to a cycle tank, comprising, successively in a cycle, a production phase, a regeneration phase and a repressurization phase, **characterized in that** the regeneration phase includes a depressurization initial step (c-d) in which gas is extracted cocurrently from the adsorber and sent to the cycle tank (6) and which includes a first substep (c) in which the gas mixture to be separated is concomitantly sent cocurrently to the adsorber.

2. Process according to Claim 1, **characterized in that** the depressurization initial step (c-d) includes a second substep (d) in which gas is concomitantly extracted countercurrently from the adsorber.

3. Process according to Claim 1 and Claim 2, **characterized in that** the transition between the first (c) and second (d) substeps corresponds to a reversal in the direction of rotation of the rotating machine (3).

4. Process according to one of the preceding claims, **characterized in that** the repressurization phase includes an initial step (g-h) of repressurizing the adsorber countercurrently by gas coming from one of the tanks and including a first substep (g) in which gas is concomitantly extracted countercurrently from the adsorber.

5. Process according to Claim 4, **characterized in that** the repressurization initial step (g-h) includes a second substep (h) in which the gas mixture to be separated is concomitantly sent cocurrently to the adsorber.

6. Process according to Claim 4 and Claim 5, **characterized in that** the transition between the first (g) and second (h) repressurization substeps corresponds to a reversal in the direction of rotation of the rotating machine (3).

7. Process according to one of Claims 4 to 6, **characterized in that** the cocurrent repressurization gas during at least the second substep (h) of the repressurization initial step (g-h) comes from the production gas tank (9).

8. Process according to one of the preceding claims, **characterized in that** the regeneration phase includes a final step (f) of elution by gas coming from the cycle tank (6).

9. Process according to Claim 8, **characterized in that** the regeneration phase furthermore includes an intermediate step (e) of pure countercurrent depressurization of the adsorber.

10. Process according to Claim 8 and Claim 9, **characterized in that** the speed of the rotating machine is approximately constant over the major part of the depressurization intermediate step (e) and over the start of the elution step (f).

11. Process according to one of the preceding claims, **characterized in that** the repressurization phase includes a step (a) of pure cocurrent repressurization by the gas mixture to be separated.

12. Process according to Claim 11, **characterized in that** the speed of the rotating machine is approximately constant during the pure repressurization step (a) and a first part of the production step (b).

13. Process according to one of the preceding claims, **characterized in that** the duration of the cycle (t₀-t₁₂) is less than 90 seconds.

14. Process according to one of the preceding claims for the production of oxygen from air.
